# EUROPÄISCHE PATENTANMELDUNG

(11) **EP 0 675 399 A1**
(43) Veröffentlichungstag der Anmeldung: **04.10.1995**
(21) Anmeldenummer: 95104796.8
(22) Anmeldetag: 31.03.1995
(51) Int. Cl.: G03B 41/00, H05B 33/12

(54) **Kaltlichtquelle für eine Vorrichtung zur Qualitätsprüfung von Belichtungsmaterial**

(30) Priorität: 31.03.1994 US 220589
(71) Anmelder: PEHAMED Geräte GmbH, D-65843 Sulzbach/Taunus (DE)
(72) Erfinder: Schwuchow, Klaus, D-65812 Bad Soden (DE)
(74) Vertreter: Linser, Heinz

(57) **Zusammenfassung**

Die Erfindung betrifft eine Kaltlichtquelle, insbesondere für eine Vorrichtung zur universellen Qualitätsprüfung von Belichtungsmaterial, besonders von technischen Filmen oder Röntgenfilmen, mit Hilfe einer als Sensitometer ausgebildeten Belichtungseinrichtung und eines Densitometers, welche zu einem Gerät zusammengefaßt und funktionell kombiniert sind. Die Lichtquelle ist als flächenhafte Lumineszenzfolie ausgebildet, welche in verschiedenen Farben durch unterschiedliche Wechselfelder im Bereich von 50 Hz bis 10 KHz mit einer Wechselspannung von 10 bis 250 Volt in den Farben grün, gelb, blau und weiß anregbar ist. Als Lichtquelle für ein Sensitometer wird eine in einer Ebene liegende und in zwei Farben anregbare Lumineszenzfolie verwendet.

## Beschreibung

Die Erfindung betrifft eine Kaltlichtquelle insbesondere für eine Vorrichtung zur universellen Qualitätsprüfung von Belichtungsmaterial, insbesondere von technischen Filmen oder Röntgenfilmen, mit Hilfe einer als Sensitometer ausgebildeten Belichtungseinrichtung und eines Densitometers, welche zu einem Gerät zusammengefaßt und funktionell kombiniert sind.

Zur Bestimmung der Qualität eines Films, insbesondere eines Röntgenfilms ist es notwendig, zwei Prozesse durchzuführen, nämlich eine Aufbelichtung eines Graukeils und eine anschließende Densitometermessung, wozu auch zwei getrennte und unterschiedliche Meßgeräte benötigt werden. Die hierzu benötigten Geräte sind nicht nur aufwendig und damit teuer, sondern ihre Bedienung ist auch komplex, insbesondere unter Berücksichtigung der Tatsache, daß diese Aufbelichtungen und Messungen in der Dunkelkammer durchgeführt werden müssen oder können.

In der Röntgenmedizin werden Röntgenfilme mit unterschiedlicher spektraler Empfindlichkeit verwendet, nämlich Filme, deren maximale Spektralempfindlichkeit jeweils im grünen oder blauen Bereich liegt. Je nach verwendeter Filmart muß daher auch der auf dem Film herzustellende Graukeil mit dem Licht hergestellt werden, welches seiner spektralen Empfindlichkeit entspricht.

Um dieses Problem zu lösen müssen daher entweder zwei an verschiedenen Orten befindliche Lichtquellen der geforderten Art vorhanden sein oder eine Lichtquelle mit weißem Licht, bei der der jeweils nicht benötigte Farbanteil herausgefiltert wird. Werden zwei Lichtquellen vorgesehen, so sind diese notwendigerweise an zwei verschiedenen Orten angeordnet, so daß ein erhöhter Raumbedarf notwendig ist und die räumliche Anpassung des zu belichtenden Films entsprechend berücksichtigt werden muß.

Im Falle einer weißen Lichtquelle ist bei der Umschaltung von einer Lichtfarbe zur anderen ein Filterwechsel notwendig und darüberhinaus ist eine weiße Lichtquelle sehr energiereich, so daß sie sich nicht für einen Batteriebetrieb eignet.

Der Erfindung liegt daher die Aufgabe zugrunde, eine preiswerte Lichtquelle mit einer entsprechenden Schaltung vorzuschlagen, mit deren Hilfe eine Qualitätskontrolle eines Films der eingangs genannten Art und auch Einzelmessungen in einfacher und sicherer Weise durchgeführt werden können, wobei die Vorrichtung für den Batteriebetrieb geeignet sein soll und eine Anpassung an die spektrale Empfindlichkeit des zu prüfenden Films in einfacher Weise gegeben sein soll.

Die Lösung dieser Aufgabe besteht nach der Erfindung darin, daß die Kaltlichtquelle als flächenhafte Lumineszenzfolie ausgebildet ist, welche in verschiedenen Farben durch unterschiedliche Wechselfelder im Bereich von 50 Hz bis 10 KHz mit einer Wechselspannung von 10 bis 250 Volt in den Farben grün, gelb, blau und weiß anregbar ist. Eine solche Lichtquelle benötigt eine geringe Energie, so daß im Umfeld dieser Lichtquelle keine Wärme erzeugt wird, sie benötigt äußerst wenig Raum und sie läßt sich räumlich flexibel gestalten. Schließlich läßt sich die lichtaussende Quelle als eine Fläche mit gleichmäßiger Leuchtdichte herstellen, wobei die unterschiedlichen Farben der entsprechend angeregten Folie praktisch von dem gleichen Ort ausgehen.

Die Lumineszenzsquelle ist somit in vorteilhafter Weise als Folie ausgebildet und weist in beliebiger Kombination grünes, blaues, gelbes oder weißes Licht emittierende Leuchtschichten auf, welche durch definierte elektrische Wechsel-Felder anregbar sind. Für den vorliegenden Anwendungsfall werden jedoch nur die Farben blau und grün benötigt.

Die in den verschiedenen Farben emittierenden Leuchtschichten der Lumineszenzquelle sind in einer Ausführungsform der Erfindung als in einer Ebene und eng nebeneinander liegende Lumineszenzstreifen ausgebildet, welche voneinander elektrisch isoliert sind und bezüglich ihrer Farbaussendung in abwechselnder Folge angeordnet sind.

Die in den verschiedenen Farben emittierenden Leuchtschichten der Lumineszenzfolie sind in einer weiteren Ausführungsform der Erfindung als in verschiedenen Ebenen und versetzt untereinander liegende Lumineszenzstreifen ausgebildet, welche voneinander elektrisch isoliert sind und bezüglich ihrer Farbaussendung in abwechselnder Folge angeordnet sind.

Zwischen der Lumineszenzfolie und dem zu belichtenden Objekt wird zweckmäßig eine optische Streuplatte zur gleichmäßigen Lichtverteilung angeordnet.

Die Kaltlichtquelle nach der Erfindung ist als Leuchtkondensator aufgebaut, bei der zwischen zwei Elektroden ZnS-Kristalle in einem Dielektrikum angeordnet sind, wobei die in Richtung der Lichtaussendung angeordnete Elektrode transparent ist und die rückseitige Elektrode als Lichtreflektor ausgebildet ist.

Die Elektroden sind mit dem Dielektrikum in vorteilhafter Weise in einem lichttransparenten elastischen Kunststoff eingebettet.

Für die Verwendung der Kaltlichtquelle in einem kombinierten Gerät eines Sensitometers/Densitometers sind die in den Farben grün und blau emittierenden Leuchtschichten der Lumineszenzfolie vorzugsweise als in einer Ebene und eng nebeneinander liegende Lumineszenzstreifen ausgebildet, welche voneinander elektrisch isoliert sind und bezüglich ihrer Farbaussendung in abwechselnder Folge angeordnet sind. Damit werden in vorteilhafter Weise die beiden gewünschten Lichtfarben in der gleichen Ebene erzeugt und ausgesendet.

Nach der Erfindung ist zwischen der Lumineszenzfolie und dem zu belichtenden Film eine Streuscheibe zur gleichmäßigen Lichtverteilung über die gesamte Leuchtfläche angeordnet.

Die Erfindung wird anhand der Zeichnung näher erläutert. Hierbei zeigen:
- FIGUR 1: eine Draufsicht auf eine Lumineszenzfolie für zwei Farben, etwa in natürlicher Größe;
- FIGUR 2: eine schematische Darstellung im Längsschnitt durch den Aufbau der Lumineszenzfolie, der darüber befindlichen Streufläche und des zu belichtenden Films;
- FIGUR 3: eine Teildraufsicht auf die Lumineszenzfolie nach Figur 1 jedoch in stark vergrößerter Darstellung,
- FIGUR 4: einen Längsschnitt durch den Aufbau einer Lichtquelle;
- FIGUR 5: einen Querschnitt durch den Aufbau einer Lichtquelle und
- FIGUR 6: eine perspektivische Darstellung einer kombinierten Vorrichtung eines Sensitometers mit einem Densitometer zur Anwendung der Lichtquelle;

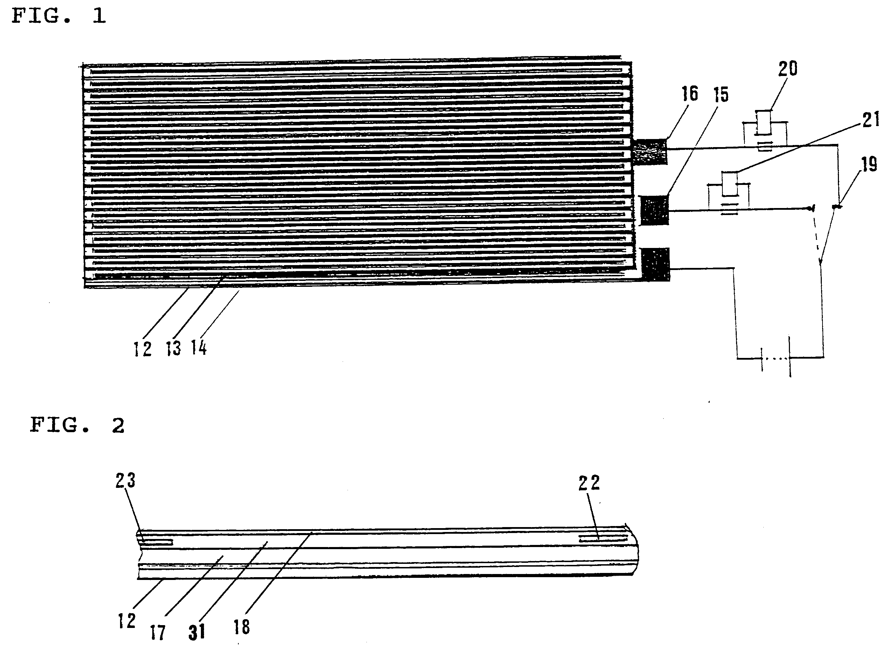

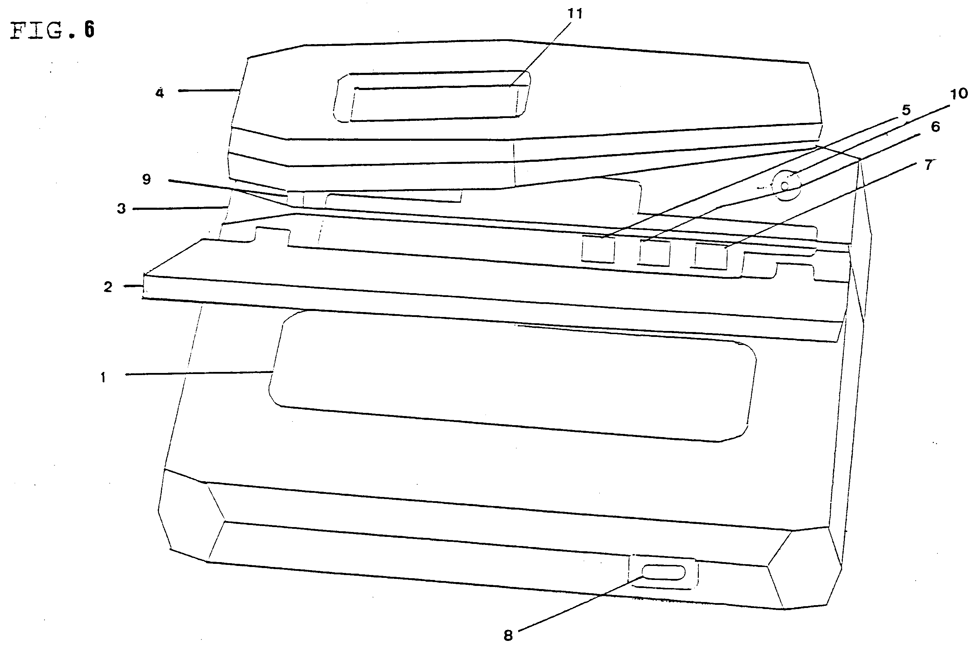

Die Figur 1 zeigt die Draufsicht einer Lumineszenzfolie 12 für grünes und blaues Licht. Hierzu befinden sich entsprechend dotierte Kristalle auf äußerst kleine Folienstreifen 13 und 14, welche voneinander elektrisch isoliert sind. Mit 15 und 16 sind die elektrischen Anschlüsse zur Erregung der einzelnen Folien bezeichnet, welche über einen Geräte-Schalter 8 (s. Figur 6) wechselweise erregt werden können. Die Erregung der verschiedenen Farben der Lumineszenzkristalle und ihre Helligkeit erfolgt durch Auswahl einer geeigneten Frequenz und elektrischen Spannungsgröße. Die Wechselspannung kann sich etwa zwischen 20 und 220 Volt AC und die Frequenz etwa zwischen 50 Hz und 10 KHz bewegen. Erfolgt die Energieversorgung mit einer Gleichspannungsquelle 19, so ist dementsprechend ein DC/AC-Konverter vorzusehen, welcher hier nur schematisch wiedergegeben ist.

Mit der Umschaltung von einer Farbe zur anderen mit Hilfe des Schalters 8 erfolgt gleichzeitig eine akustische Signalgabe über die Lautsprecher bzw. Tongeneratoren 20 bzw. 21 in einer unterschiedlichen Tonlage oder Tonfolge.

Mit der Erregung der Lumineszenzfolie 12 durch Betätigung des Schalters 8 wird gleichzeitig eine Leuchtdiode 22 bzw. 23 erregt und eine für die verwendete Lichtfarbe charakteristische Kennung auf den Film aufbelichtet, so daß seine Empfindlichkeit optisch festgehalten ist.

Die Figur 2 zeigt eine schematische Darstellung im Längsschnitt durch den Aufbau der Lumineszenzfolie 12, der darüber befindlichen Streufläche 17, der Abschlußglasplatte 31 und des zu belichtenden Films 18.

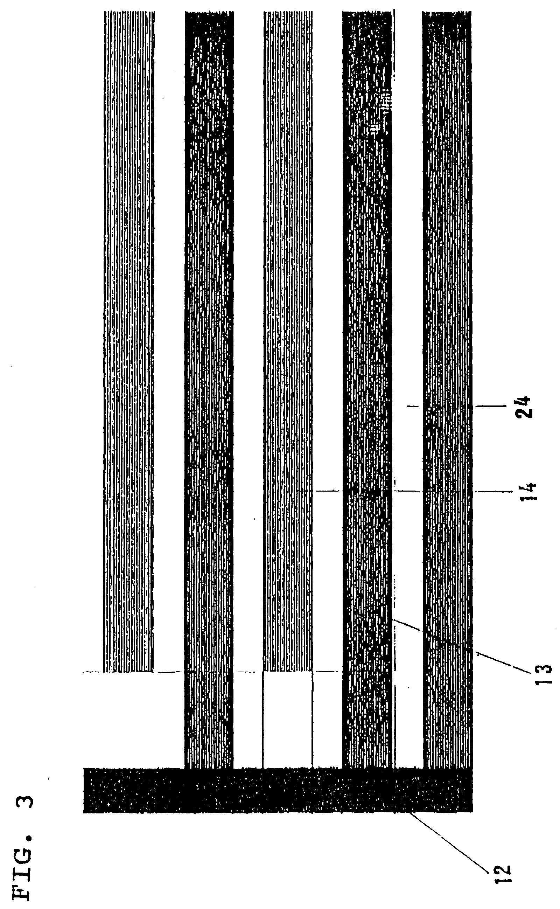

Die Figur 3 zeigt eine Teildraufsicht auf die Lumineszenzfolie 12 in starker Vergrößerung. Die Folienstreifen 13 und 14 bestehen hierbei aus einzelnen Litzen, welche eng beieinander liegen. Zwischen den Folienstreifen 13 und 14 sind entsprechende Abstände 24, welche als elektrische Isolierung ausgebildet sind. Der Folienstreifen 13 sendet bei elektrischer Anregung ein monochromatisches grünes Licht einer Wellenlänge von 510 nm aus, während der Folienstreifen 14 bei elektrischer Anregung ein monochromatisches blaues Licht einer Wellenlänge von 460 nm aussendet. Da es sich bei der Lumineszenz um eine kalte Lichterzeugung handelt, erfolgt die Lichtaussendung unmittelbar mit der elektrischen Anregung ohne merkliche Zeitverzögerung und auch ohne Nachleuchteffekte. Dies bedeutet, daß die Vorrichtung nach der Erfindung unmittelbar einsatzbereit ist und bei einer Umschaltung von einer Farbaussendung zur anderen ist die Vorrichtung auch in der jeweils anderen Farbe sofort einsatzbereit.

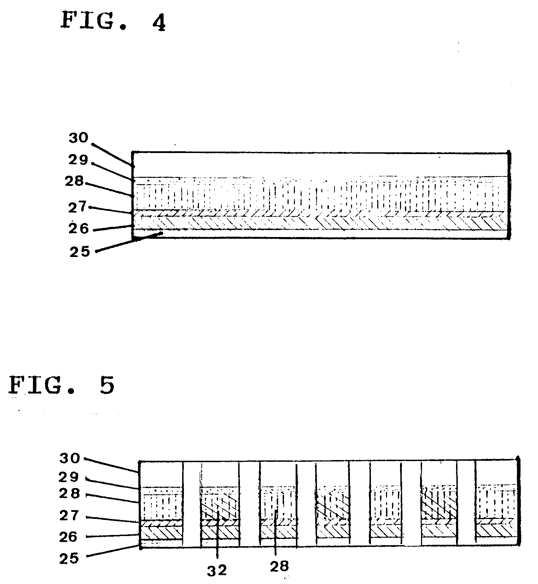

Die Figur 4 zeigt einen Längsschnitt durch den Aufbau einer Leuchtfolie. Diese besteht aus einer Trägerschicht 25 aus Kunststoff, einer elektrischen Isolationsschicht 26, einer Rückseitigen und reflektierenden Elektrode 27, der eigentlichen Leuchtkristallschicht 28 und der darüber befindlichen lichttransparenten Elektrode 29. Diese Elektrode ist durch eine lichttransparente Kunststoffschicht 30 abgedeckt.

Die Figur 5 zeigt den Querschnitt zur Figur 4, wobei gleiche Elemente mit gleichen Bezugszeichen versehen sind. Die Leuchtkristallschicht 28 leuchtet beispielsweise in grüner Farbe, während die danebenliegende Leuchtkristallschicht 32 in blauer oder einer anderen Farbe, je nach Auswahl, leuchtet.

In der Figur 6 bezeichnet 1 das Sensitometer mit einer teilweise geöffneten Abdeckklappe 2. Mit 3 ist eine Automatik-Meßstrecke bezeichnet und auf dem hinteren Geräteteil liegt ein abnehmbarer Meßarm 4 zur Durchführung von Einzelmessungen, welcher um eine Kippvorrichtung 9 kippbar gelagert ist. Unter dem vorderen Teil des kippbaren Meßarms 4 befindet sich eine Lichtquelle 10 im Gehäuse 1, welche mit einem im Meßarm befindlichen Strahlenempfänger zusammenwirkt. Der Meßarm 4 ermöglicht die Messung großflächiger Filme. Hierzu wird der Film zwischen Gehäuse 1 und Meßarm 4 eingeschoben und der zu messende Punkt wird über die Lichtquelle 10 gebracht. Der Meßarm 4 wird sodann heruntergekippt, so daß zwischen Lichtquelle 10 und Lichtstrahlenempfänger nur noch ein minimaler Abstand besteht. Das Meßergebnis wird in der Anzeige 11 unmittelbar digital wiedergegeben.

Die Gerätebedienung erfolgt mit Hilfe der Schalter 5, 6 und 7. Der Schalter 8 ermöglicht die Umschaltung von einer grünen zu einer blauen Lichtquelle, welche entsprechende Kristalle zur Erzeugung einer jeweils reinen spektralen Lichtverteilung aufweisen.

Die Kaltlichtquelle nach der Erfindung wird vorteilhaft als Lichtquelle in einer Meßeinrichtung angewendet, mit der es in einfacher Weise möglich ist, eine Qualitätskontrolle eines Films, beispielsweise Röntgenfilms schnell und einfach mit der erforderlichen Lichtfarbe durchzuführen. Hierzu wird nur ein Gerät mit unterschiedlichen Funktionen benötigt und Fehlmessungen sowie Fehlbelichtungen sind praktisch ausgeschlossen, wobei sich das Gerät in einer Dunkelkammer leicht handhaben läßt und die Auswahl des benötigten und eingeschalteten Lichts auch akustisch gemeldet wird.

Das Gerät kann über ein Netzteil oder eine Batterie betrieben werden. Über vorhandene Schnittstellen lassen sich Schreiber, Drucker oder Komputer anschließen, welche die gemessenen Werte weiter verarbeiten, archivieren oder übertragen.

## Patentansprüche

1. Kaltlichtquelle, insbesondere für eine Vorrichtung zur universellen Qualitätsprüfung von Belichtungsmaterial, besonders von technischen Filmen oder Röntgenfilmen, mit Hilfe einer als Sensitometer ausgebildeten Belichtungseinrichtung und eines Densitometers, welche zu einem Gerät zusammengefaßt und funktionell kombiniert sind, **dadurch gekennzeichnet, daß** die Lichtquelle als flächenhafte Lumineszenzfolie ausgebildet ist, welche in verschiedenen Farben durch unterschiedliche Wechselfelder im Bereich von 50 Hz bis 10 KHz mit einer Wechselspannung von 10 bis 250 Volt in den Farben grün, gelb, blau und weiß anregbar ist.

2. Kaltlichtquelle nach Anspruch 1, **dadurch gekennzeichnet, daß** die Lumineszenzsquelle (12) als Folie ausgebildet ist und grün-, und/oder blau-, und/oder gelb- und/oder weißemittierende Leuchtschichten (13,14) aufweist, welche durch definierte elektrische Wechsel-Felder anregbar sind.

3. Kaltlichtquelle nach Anspruch 1 oder 2, **dadurch gekennzeichnet, daß** die in den verschiedenen Farben emittierenden Leuchtschichten (13,14) der Lumineszenzfolie (12) als in einer Ebene und eng nebeneinander liegende Lumineszenzstreifen ausgebildet sind, welche voneinander elektrisch isoliert sind und bezüglich ihrer Farbaussendung in abwechselnder Folge angeordnet sind.

4. Kaltlichtquelle nach Anspruch 1 oder 2, **dadurch gekennzeichnet, daß** die in den verschiedenen Farben emittierenden Leuchtschichten (13,14) der Lumineszenzfolie (12) als in verschiedenen Ebenen und versetzt untereinander liegende Lumineszenzstreifen ausgebildet sind, welche voneinander elektrisch isoliert sind und bezüglich ihrer Farbaussendung in abwechselnder Folge angeordnet sind.

5. Kaltlichtquelle nach Anspruch 1 oder einem der voranstehenden, **dadurch gekennzeichnet, daß** zwischen der Lumineszenzfolie (12) und dem zu belichtenden Objekt (18) eine optische Streuplatte (17) zur gleichmäßigen Lichtverteilung angeordnet ist.

6. Kaltlichtquelle nach Anspruch 1 oder einem der voranstehenden Ansprüche, d**adurch gekennzeichnet, daß** die Leuchtfolie (12) als Leuchtkondensator aufgebaut ist, bei der zwischen zwei Elektroden ZnS-Kristalle in einem Dielektrikum angeordnet sind, wobei die in Richtung der Lichtaussendung angeordnete Elektrode (29) transparent ist und die rückseitige Elektrode (27) als Lichtreflektor ausgebildet ist.

7. Kaltlichtquelle nach Anspruch 6, **dadurch gekennzeichnet, daß** die Elektroden (27, 29) mit dem Dielektrikum in einem lichttransparenten elastischen Kunststoff (30) eingebettet sind.
